# DEMANDE DE BREVET EUROPEEN

(11) **EP 3 025 912 A1**
(43) Date de publication de la demande: **01.06.2016**
(21) Numéro de dépôt: 15196140.6
(22) Date de dépôt: 24.11.2015
(51) Int. Cl.: B60R 5/04

(54) **SYSTÈME DE RECOUVREMENT D'UN COMPARTIMENT À BAGAGES DE VÉHICULE AUTOMOBILE**

(30) Priorité: 27.11.2014 FR 1461556
(71) Demandeur: Cera APS, 51100 Reims (FR)
(72) Inventeur: AIRAULT, Jean-Yves, 56430 Concoret (FR); LECOMTE, Alicia, 51220 Villers-Franqueux (FR)
(74) Mandataire: Sayettat, Julien Christian

(57) **Abrégé**

L'invention concerne un système (1) comprenant une tablette (2) et deux ébénisteries (3) latérales dudit compartiment, ladite tablette comprenant : un volet avant (4) ; un volet central (5) articulé audit volet avant selon une première charnière (6) transversale ; un volet arrière (7) articulé audit volet central selon une deuxième charnière (8) parallèle à ladite première charnière, de sorte que ladite tablette soit actionnable entre une configuration d'utilisation, où tous lesdits volets sont coplanaires, et une configuration repliée, où lesdits volets sont repliés en accordéon ; un moyen de rappel dudit volet central en rabattement vers ledit volet avant, ledit système comprenant en outre un dispositif de verrouillage réversible de ladite tablette en configuration d'utilisation comprenant : un doigt respectif monté mobile sur chacune desdites ébénisteries entre une position saillante de verrouillage et une position rétractée de déverrouillage ; une butée respective disposée latéralement de part et d'autre d'un desdits volets central ou arrière, ladite butée coopérant avec le doigt correspondant lorsqu'il est en position de verrouillage pour verrouiller ladite tablette en configuration d'utilisation.

## Description

L'invention concerne un système de recouvrement d'un compartiment à bagages de véhicule automobile.

Il est connu de réaliser un système de recouvrement d'un compartiment à bagages de véhicule automobile, ledit système comprenant une tablette et deux ébénisteries latérales dudit compartiment, ladite tablette comprenant :
- un volet avant,
- un volet central articulé audit volet avant selon une première charnière transversale, de sorte que ledit volet central soit actionnable en rotation entre une configuration de recouvrement, où il est coplanaire avec ledit volet avant, et une configuration repliée, où il est rabattu vers la face d'endroit dudit volet avant,
- un volet arrière articulé audit volet central selon une deuxième charnière parallèle à ladite première charnière, de sorte que ledit volet arrière soit actionnable en rotation entre une configuration de recouvrement, où il est coplanaire avec ledit volet central, et une configuration repliée, où il est rabattu vers la face d'envers dudit volet central, de sorte que ladite tablette soit actionnable entre une configuration d'utilisation, où tous lesdits volets sont coplanaires, et une configuration repliée, où lesdits volets sont repliés en accordéon,
- un moyen de rappel dudit volet central en rabattement vers ledit volet avant,
ledit système comprenant en outre un dispositif de verrouillage réversible de ladite tablette en configuration d'utilisation.

Divers dispositifs de verrouillage ont été proposés pour maintenir la tablette en configuration d'utilisation, lesdits dispositifs pouvant présenter divers inconvénients :
- ils peuvent présenter une certaine fragilité, quand des doigts de verrouillage saillants sont disposés sur la tablette, lesdits doigts risquant d'être cassés lors du montage/démontage de la tablette,
- les vibrations du véhicule en roulage peuvent occasionner un déverrouillage non voulu de la tablette alors qu'elle est en configuration d'utilisation,
- l'utilisateur est souvent amené à réaliser manuellement le déverrouillage de la tablette pour permettre son repliement, ce qui est peu ergonomique.

L'invention a pour but de pallier ces inconvénients.

A cet effet, l'invention propose un système de recouvrement d'un compartiment à bagages de véhicule automobile, ledit système comprenant une tablette et deux ébénisteries latérales dudit compartiment, ladite tablette comprenant :
- un volet avant,
- un volet central articulé audit volet avant selon une première charnière transversale, de sorte que ledit volet central soit actionnable en rotation entre une configuration de recouvrement, où il est coplanaire avec ledit volet avant, et une configuration repliée, où il est rabattu vers la face d'endroit dudit volet avant,
- un volet arrière articulé audit volet central selon une deuxième charnière parallèle à ladite première charnière, de sorte que ledit volet arrière soit actionnable en rotation entre une configuration de recouvrement, où il est coplanaire avec ledit volet central, et une configuration repliée, où il est rabattu vers la face d'envers dudit volet central, de sorte que ladite tablette soit actionnable entre une configuration d'utilisation, où tous lesdits volets sont coplanaires, et une configuration repliée, où lesdits volets sont repliés en accordéon,
- un moyen de rappel dudit volet central en rabattement vers ledit volet avant,
ledit système comprenant en outre un dispositif de verrouillage réversible de ladite tablette en configuration d'utilisation, ledit dispositif de verrouillage comprenant :
- un doigt respectif monté mobile sur chacune desdites ébénisteries entre une position saillante de verrouillage et une position rétractée de déverrouillage,
- une butée respective disposée latéralement de part et d'autre d'un desdits volets central ou arrière, ladite butée coopérant avec le doigt correspondant lorsqu'il est en position de verrouillage pour verrouiller ladite tablette en configuration d'utilisation.

Dans cette description, les termes de positionnement dans l'espace (transversal, vertical, latéral, avant, arrière,...) sont pris en référence au système disposé dans le véhicule, la tablette étant en configuration d'utilisation.

Avec l'agencement proposé, le dispositif de verrouillage :
- présente une robustesse accrue du fait de l'absence de doigts de verrouillage saillants disposés sur la tablette,
- le principe de verrouillage retenu est particulièrement efficace et empêche un déverrouillage non voulu de la tablette alors qu'elle est en configuration d'utilisation,
- le déverrouillage de la tablette pour permettre son repliement peut aisément être automatisé.

D'autres particularités et avantages de l'invention apparaîtront dans la description qui suit, faite en référence aux figures jointes, dans lesquelles :

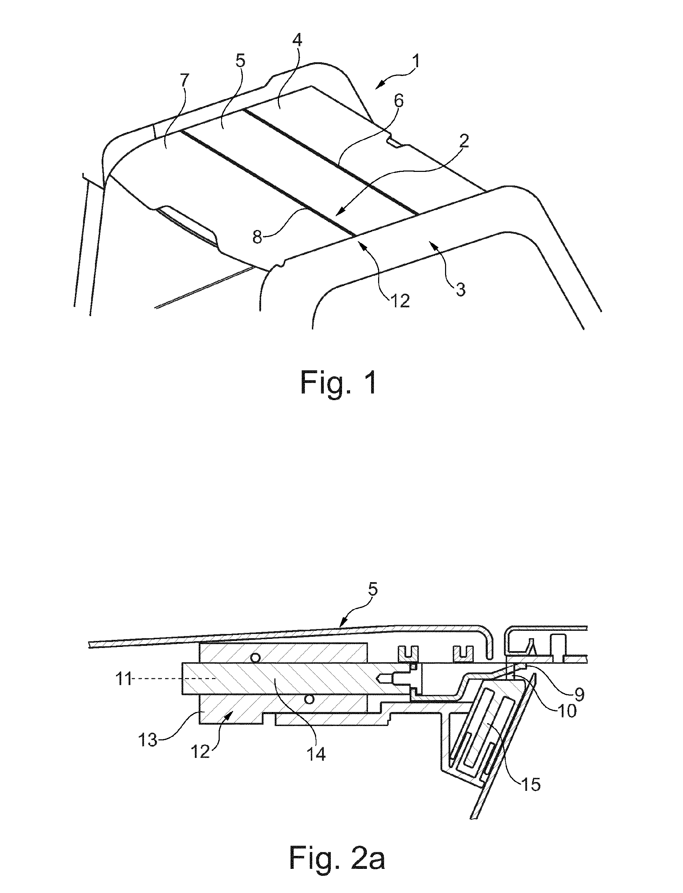

- la figure 1 est une vue schématique en perspective d'un système selon une réalisation, la tablette étant en configuration d'utilisation,

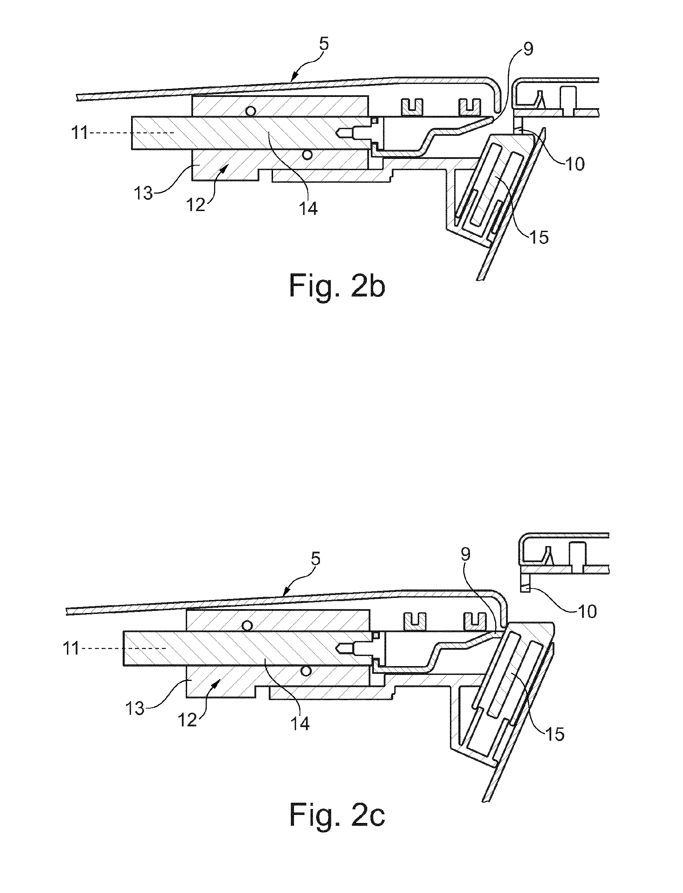

- les figures 2 sont des vues schématiques en coupe transversale verticale du système de la figure 1, le dispositif de verrouillage étant activé avec la tablette en configuration d'utilisation (2a), désactivé avec la tablette en configuration d'utilisation (2b), et désactivé avec la tablette en cours de pliage vers sa configuration repliée, le cache étant en position de masquage (2c).

En référence aux figures, on décrit un système 1 de recouvrement d'un compartiment à bagages de véhicule automobile, ledit système comprenant une tablette 2 et deux ébénisteries 3 latérales dudit compartiment, ladite tablette comprenant :
- un volet avant 4,
- un volet central 5 articulé audit volet avant selon une première charnière 6 transversale, de sorte que ledit volet central soit actionnable en rotation - notamment d'un demi-tour - entre une configuration de recouvrement, où il est coplanaire avec ledit volet avant, et une configuration repliée, où il est rabattu vers la face d'endroit dudit volet avant,
- un volet arrière 7 articulé audit volet central selon une deuxième charnière 8 parallèle à ladite première charnière, de sorte que ledit volet arrière soit actionnable en rotation - notamment d'un demi-tour - entre une configuration de recouvrement, où il est coplanaire avec ledit volet central, et une configuration repliée, où il est rabattu vers la face d'envers dudit volet central, de sorte que ladite tablette soit actionnable entre une configuration d'utilisation, où tous lesdits volets sont coplanaires, et une configuration repliée, où lesdits volets sont repliés en accordéon,
- un moyen de rappel, non représenté, - notamment sous forme d'au moins un ressort disposé entre ledit volet avant et ledit volet central - dudit volet central en rabattement vers ledit volet avant,
ledit système comprenant en outre un dispositif de verrouillage réversible de ladite tablette en configuration d'utilisation, ledit dispositif de verrouillage comprenant :
- un doigt 9 respectif monté mobile sur chacune desdites ébénisteries entre une position saillante de verrouillage et une position rétractée de déverrouillage,
- une butée 10 respective disposée latéralement de part et d'autre d'un desdits volets central ou arrière, ladite butée coopérant avec le doigt 9 correspondant lorsqu'il est en position de verrouillage pour verrouiller ladite tablette en configuration d'utilisation.

Selon la réalisation représentée, les doigts 9 sont montés mobiles en translation selon un axe transversal 11.

En variante non représentée, on peut prévoir que les doigts 9 soient montés en rotation.

Selon la réalisation représentée, les butées 10 sont disposées sur le volet central 5 - ici à proximité de la deuxième charnière 8.

Selon la réalisation représentée, le système 1 comprend, monté sur chacune des ébénisteries 3, un moyen d'actionnement 12 - notamment électrique - d'un doigt 9 respectif vers sa position de déverrouillage.

Selon la réalisation représentée, le moyen d'actionnement 12 comprend un électroaimant 13.

En variante non représentée, on peut prévoir que le moyen d'actionnement 12 soit un moteur électrique.

Selon la réalisation représentée, l'électroaimant 13 est sous forme d'une bobine à l'intérieur de laquelle coulisse une tige 14 métallique sensible à l'aimantation, le doigt 9 étant solidaire de ladite tige, ladite tige étant rappelée vers ladite bobine lorsqu'elle est traversée par un courant de manière à amener ledit doigt en position de déverrouillage.

De façon non représentée, chaque doigt 9 est couplé à un ressort respectif d'actionnement vers sa position de verrouillage.

Selon la réalisation représentée, les ébénisteries 3 sont chacune pourvue d'un cache 15 monté mobile - ici en coulissement ou, en variante non représentée, en rotation - entre une position de dégagement et une position de masquage d'un doigt 9 respectif lorsque la tablette 2 est amenée en configuration repliée, le déploiement de ladite tablette en configuration d'utilisation réalisant un appui sur lesdits caches de manière à les amener en position de dégagement pour permettre aux doigts 9 de coopérer avec les butées 10, afin de verrouiller ladite tablette.

De façon non représentée, les caches 15 sont montés sur ressort de manière à être actionnés vers leur position de masquage en l'absence de contrainte.

Selon la réalisation représentée, les caches 15 en position de masquage viennent en butée contre les doigts 9 de manière à les maintenir en position rétractée de déverrouillage, lesdits doigts se déplaçant en position saillante de verrouillage par mise en place - notamment manuelle - de la tablette 2 en configuration d'utilisation.

On peut notamment prévoir que les moyens d'actionnement 12 des doigts 9 soient activés par une impulsion générée par un émetteur intégré à la clé de démarrage du véhicule.

## Revendications

1. Système (1) de recouvrement d'un compartiment à bagages de véhicule automobile, ledit système comprenant une tablette (2) et deux ébénisteries (3) latérales dudit compartiment, ladite tablette comprenant :
• un volet avant (4),
• un volet central (5) articulé audit volet avant selon une première charnière (6) transversale, de sorte que ledit volet central soit actionnable en rotation entre une configuration de recouvrement, où il est coplanaire avec ledit volet avant, et une configuration repliée, où il est rabattu vers la face d'endroit dudit volet avant,
• un volet arrière (7) articulé audit volet central selon une deuxième charnière (8) parallèle à ladite première charnière, de sorte que ledit volet arrière soit actionnable en rotation entre une configuration de recouvrement, où il est coplanaire avec ledit volet central, et une configuration repliée, où il est rabattu vers la face d'envers dudit volet central, de sorte que ladite tablette soit actionnable entre une configuration d'utilisation, où tous lesdits volets sont coplanaires, et une configuration repliée, où lesdits volets sont repliés en accordéon,
• un moyen de rappel dudit volet central en rabattement vers ledit volet avant,
ledit système comprenant en outre un dispositif de verrouillage réversible de ladite tablette en configuration d'utilisation, ledit système étant **caractérisé en ce que** ledit dispositif de verrouillage comprend :
• un doigt (9) respectif monté mobile sur chacune desdites ébénisteries entre une position saillante de verrouillage et une position rétractée de déverrouillage,
• une butée (10) respective disposée latéralement de part et d'autre d'un desdits volets central ou arrière, ladite butée coopérant avec le doigt (9) correspondant lorsqu'il est en position de verrouillage pour verrouiller ladite tablette en configuration d'utilisation.

2. Système selon la revendication 1, **caractérisé en ce que** les doigts (9) sont montés mobiles en translation selon un axe transversal (11) ou en rotation.

3. Système selon l'une des revendications 1 ou 2, **caractérisé en ce que** les butées (10) sont disposées sur le volet central (5).

4. Système selon l'une quelconque des revendications 1 à 3, **caractérisé en ce qu'**il comprend, monté sur chacune des ébénisteries (3), un moyen d'actionnement (12) - notamment électrique - d'un doigt (9) respectif vers sa position de déverrouillage.

5. Système selon la revendication 4, **caractérisé en ce que** le moyen d'actionnement (12) comprend un électroaimant (13).

6. Système selon la revendication 5, **caractérisé en ce que** l'électroaimant (13) est sous forme d'une bobine à l'intérieur de laquelle coulisse une tige (14) métallique sensible à l'aimantation, le doigt (9) étant solidaire de ladite tige, ladite tige étant rappelée vers ladite bobine lorsqu'elle est traversée par un courant de manière à amener ledit doigt en position de déverrouillage.

7. Système selon l'une quelconque des revendications 1 à 6, **caractérisé en ce que** chaque doigt (9) est couplé à un ressort respectif d'actionnement vers sa position de verrouillage.

8. Système selon l'une quelconque des revendications 1 à 7, **caractérisé en ce que** les ébénisteries (3) sont chacune pourvue d'un cache (15) monté mobile - notamment en coulissement ou en rotation - entre une position de dégagement et une position de masquage d'un doigt (9) respectif lorsque la tablette (2) est amenée en configuration repliée, le déploiement de ladite tablette en configuration d'utilisation réalisant un appui sur lesdits caches de manière à les amener en position de dégagement pour permettre aux doigts (9) de coopérer avec les butées (10), afin de verrouiller ladite tablette.

9. Système selon la revendication 8, **caractérisé en ce que** les caches (15) sont montés sur ressort de manière à être actionnés vers leur position de masquage en l'absence de contrainte.
